# EUROPÄISCHE PATENTANMELDUNG

(11) **EP 0 940 940 A2**
(43) Veröffentlichungstag der Anmeldung: **08.09.1999**
(21) Anmeldenummer: 99103703.7
(22) Anmeldetag: 25.02.1999
(51) Int. Cl.: H04J 14/02

(54) **Übertragungsverfahren und entsprechendes Kommunikationssystem**

(30) Priorität: 03.03.1998 DE 19808943
(71) Anmelder: SIEMENS AKTIENGESELLSCHAFT, 80333 München (DE)
(72) Erfinder: Hünlich, Klaus, 85467 Neuching (DE)

(57) **Zusammenfassung**

Verfahren zum Übertragen von Daten mehrerer Übertragungskanäle zwischen einer Sende- (1) und einer Empfangsvorrichtung (2), welches insbesondere in Telekommunikationsnetzen Anwendung findet. Senderseitig wird den zu übertragenden Daten eines jeden Übertragungskanals eine Identifizierungsinformation hinzugefügt, die einer Kennung der Sendefrequenz des dem jeweiligen Übertragungskanal zugeordneten Sendemittels der Sendevorrichtung (1) entspricht. Nach Empfang und Auswertung dieser Identifizierungsinformation können empfangsseitig die entsprechenden Daten auf das dem jeweiligen Übertragungskanal zugeordnete Empfangsmittel der Empfangsvorrichtung abgebildet werden.

## Beschreibung

Die vorliegende Erfindung betrifft ein Verfahren zum Übertragen von Daten mehrerer Übertragungskanäle zwischen einer Sende- und einer Empfangsvorrichtung sowie ein Kommunikationssystem, bei dem ein derartiges Verfahren zur Anwendung kommt. Insbesondere betrifft die vorliegende Erfindung die Datenübertragung über Lichtwellenleiter in Telekommunikationssystemen.

Lichtwellenleiter sind prädestiniert für Anwendungen der Breitbandkommunikation, da sie hohe Bandbreiten bei geringer Dämpfung zulassen. Dabei wird die zu übertragende Information von einem optischen Sender, der beispielsweise durch eine Laserdiode oder eine Leuchtdiode gebildet sein kann, in ein Lichtwellenleiternetz eingekoppelt und mit einer bestimmten Wellenlänge, beispielsweise 1,5 µm, übertragen. Üblicherweise erfolgt die Übertragung mit lediglich einer optischen Wellenlänge und mit einer festen Übertragungsrate von beispielsweise 155,52 Mbps. Dies trifft insbesondere auf ATM- und STM1- Kommunikationsnetze zu. Die Wellenlänge von 1,5 µm ist insbesondere deshalb vorteilhaft, da bei dieser Wellenlänge der Lichtwellenleiter typischerweise eine äußerst geringe Dämpfung aufweist. Neben den zuvor beschriebenen Vorteilen ist es ein weiterer Vorteil von Lichtwellenleiterkabeln, daß sie durch äußere elektromagnetische Felder nicht beeinflußt werden.

Hinsichtlich der wellenlängenabhängigen Dämpfung von Lichtwellenleitern gibt es drei "Wellenlängenfenster" mit übertragungstechnisch geeigneten Lichtwellenlängenbereichen. Eines dieser Fenster liegt bei der zuvor erwähnten Wellenlänge von 1,5 µm und besitzt eine Breite von 100 nm. Bei einer Übertragung mit einer Wellenlänge innerhalb dieses Fensters besitzt der Lichtwellenleiter eine äußerst geringe Dämpfung. Durch die Bandbreite von 100 nm stehen bei der Wellenlänge von 1,5 µm ca. 13350 GHz für eine Übertragung zur Verfügung. Diese Frequenz-Bandbreite ist jedoch derzeit für einen Übertragungskanal physikalisch nicht vollständig nutzbar. Dieses Problem kann dadurch behoben werden, daß das relativ breite Fenster von 100 nm, welches eine Übertragung mit einer äußerst geringen Dämpfung zuläßt, in mehrere schmalere Bänder aufgeteilt wird, von denen jedes mit einer kleineren schaltungstechnisch beherrschbaren Bitrate belegt wird. Dies bedeutet, daß jeder Verbindung bzw. jedem Übertragungskanal eine bestimmte eindeutige Wellenlänge oder Übertragungsfrequenz zugeordnet wird, wobei die Lichtstrahlen der einzelnen Lichtquellen, die die unterschiedlichen Wellenlängen unabhängig voneinander emittieren, über selektive Wellenlängenmultiplexer zusammengefaßt und in den Lichtwellenleiter eingekoppelt werden. Empfängerseitig werden die einzelnen Lichtstrahlen über einen geeigneten Demultiplexer wieder getrennt und unterschiedlichen Empfängern zugeführt, wobei jeder Empfänger auf die Sendefrequenz des entsprechenden Senders mit Hilfe geeigneter Oszillatoren abgestimmt ist.

Ein Problem stellt dabei die Tatsache dar, daß auf der Empfangsseite die unterschiedlichen empfangenen Frequenzen unterschiedlichen Empfängern zuzuordnen sind, d.h. nach der Übertragung soll auf der Empfangsseite exakt die einem bestimmten Übertragungskanal entsprechende Frequenz aus dem Bündel der übertragenen Frequenzen herausgefiltert und auf einen dem entsprechenden Übertragungskanal zugeordneten Empfänger abgebildet werden, wobei jeweils ein Sender und ein Empfänger einem bestimmten Übertragungskanal zugeordnet sind.

Dabei tritt das Problem auf, daß insbesondere bei optischen Sendern, wie z. B Laserdioden, die exakte Senderfrequenz unter anderem von der Arbeitstemperatur des jeweiligen Senders abhängig ist. Für optische Sender gilt z. B. die Faustregel, daß die Sendefrequenz bei einer Temperaturänderung von 1° K um etwa 1 GHz verändert wird.

Da in der Regel auf der Sendeseite andere Temperaturen herrschen als auf der Empfangsseite, kann der Fall auftreten, daß einer Sendefrequenz empfangsseitig ein anderer Wert als auf der Sendeseite zugeordnet wird und demzufolge die Daten des entsprechenden Übertragungskanals einem falschen Empfänger zugewiesen werden.

Die auf der Empfangsseite durch die Temperaturabweichung zu der Sendeseite gegebenenfalls auftretende temperaturabhängige Misszuweisung der Empfangsseite kann nämlich sogar Werte annehmen, die großer als der Abstand zwischen zwei Übertragungskanälen sind, so daß eine eindeutige Zuordnung zwischen einem Sender und einem Empfänger allein aufgrund der Frequenzen nicht mehr gegeben ist.

Dieses Problem kann dadurch behoben werden, daß die Temperatur sende- und empfangsseitig stabilisiert wird, um eine eindeutige Frequenzzuordnung zu erzielen. Diese Maßnahmen sind jedoch mit erheblichen Kosten verbunden, die der Wirtschaftlichkeit der gesamten Anordnung entgegenstehen.

Der vorliegenden Erfindung liegt daher die Aufgabe zugrunde, ein Übertragungsverfahren sowie ein entsprechendes Kommunikationssystem vorzuschlagen, wobei die zuvor beschriebenen Probleme beseitigt sind und insbesondere mit einfachen Mitteln stets eine exakte Zuordnung eines Übertragungskanals zu einem entsprechenden Empfänger möglich ist.

Diese Aufgabe wird hinsichtlich des Übertragungsverfahrens durch ein Verfahren mit dem Merkmal des Anspruches 1 und hinsichtlich des Kommunikationssystems durch ein Kommunikationssystem mit den Merkmalen des Anspruches 7 gelöst.

Gemäß der vorliegenden Erfindung wird zusammen mit der eigentlichen Nutzinformation eine Identifizierungsinformation übertragen, die jeweils die Sendefrequenz des entsprechenden Senders bzw. den Sender selbst definiert. Diese Identifizierungsinformation wird empfangsseitig ausgewertet, so daß abhängig von dieser Identifizierungsinformation die entsprechenden Daten dem richtigen Empfänger bzw. Empfangsmittel zugewiesen werden können, ohne daß für den Empfänger oder den Sender eine Temperaturstabilisierung notwendig wäre.

Ist senderseitig eine Leitungscodierung vorgesehen, wird vorteilhafterweise für die Übertragung der Identifizierungsinformation die bei der Leitungscodierung typischerweise auftretende Redundanz verwendet, wobei die Identifizierungsinformation beispielsweise zusammen mit einer zu übermittelnden Synchroninformation rahmen- oder taktweise an bestimmten Stellen den zu übertragenden Datenstrom eingeblendet und empfangsseitig ausgefiltert wird.

Die Erfindung ist insbesondere auf Übertragungen von mehreren Kanälen mit mehreren unterschiedlichen Wellenlängen (Wellenlängenmultiplex) anwendbar. Die vorliegende Erfindung ist jedoch nicht auf den hierin beschriebenen bevorzugten Anwendungsfall einer Lichtwellenleiterübertragung beschränkt, sondern kann überall dort Anwendung finden, wo eine möglichst exakte Abbildung von mehreren Übertragungskanälen, die gleichzeitig übertragen werden, auf mehrere Empfänger notwendig ist.

Die Erfindung wird nachfolgend anhand eines bevorzugten Ausführungsbeispiels unter Bezugnahme auf die beigefügte Zeichnung näher erläutert.
Figur 1 zeigt ein beispielhaftes Blockschaltbild des Aufbaus einer Sende- und Empfangsvorrichtung gemäß der vorliegenden Erfindung, und
Figur 2 zeigt beispielhaft den Aufbau eines gemäß Figur 1 übertragenen Datenstroms.

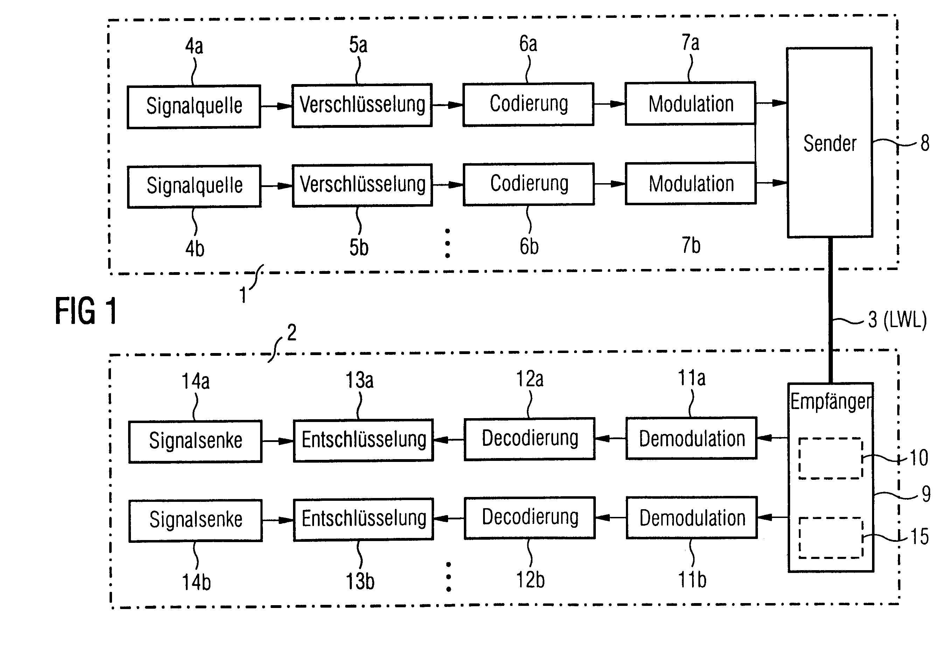

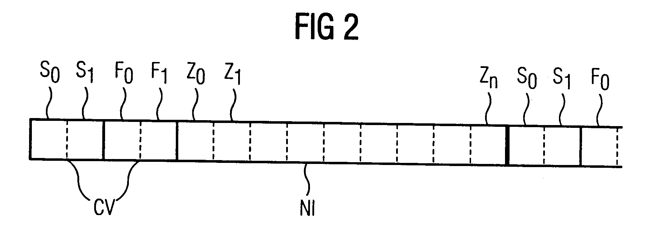

Die Erfindung wird nachfolgend unter Bezugnahme auf Figur 1 und 2 anhand eines Ausführungsbeispiels beschrieben, bei dem eine Datenübertragung über ein Lichtwellenleiternetz stattfindet. Zudem sei angenommen, daß das zuvor erläuterte Prinzip der Wellenlängenmultiplexübertragung angewendet wird, d. h. von einer Sendevorrichtung werden mehrere Übertragungskanäle gleichzeitig über ein und denselben Lichtwellenleiter zu einer Empfangsvorrichtung übertragen, wobei jeder Übertragungskanal mit einer anderen Wellenlänge innerhalb des zuvor beschriebenen Fensters von 100 nm bei der gewünschten Übertragungswellenlänge von 1,5 um übertragen wird.

Wie in Figur 1 gezeigt ist, ist eine Sendevorrichtung 1 über einen Lichtwellenleiter (LWL) 3 mit einer Empfangsvorrichtung 2 verbunden. Die Sende- und Empfangsvorrichtungen können jeweils beispielsweise durch Vermittlungsstellen bzw. Netzknoten in einem Telekommunikationsnetz gebildet sein. Die Sendevorrichtung 1 empfängt von mehreren analogen oder digitalen Signalquellen 4a, 4b zu übertragene Daten, wobei diese Signalquellen 4a, 4b beispielsweise durch Teilnehmer-Endgeräte des Telekommunikationsnetzes gebildet sein können. Die von einer Signalquelle 4a, 4b empfangenen Daten stellen jeweils einen Übertragungskanal dar. Da über den Lichtwellenleiter 3 vorzugsweise digitale Daten übertragen werden sollen, müssen die Daten, falls es sich bei einer der Signalquellen 4a, 4b um eine analoge Signalquelle handelt, zunächst einem Analog/Digital-Wandler sowie gegebenenfalls einem Quellencodierer zugeführt werden, um die analogen Signale in digitale Signale unzuwandeln. Gegebenenfalls kann gewünscht sein, die zu übertragenden Nachrichten gegen unbefugtes Lesen zu sichern. In diesem Fall können die Daten der einzelnen Übertragungskanäle durch Verschlüsseler 5a, 5b verschlüsselt werden.

Auf dem Übertragungsweg unterliegen die übertragenen Signale grundsätzlich gewissen Störeinflüssen, so daß es sinnvoll sein kann, den eigentlichen Signalcode gegen Übertragungsfehler zu schützen. Aus diesem Grunde ist es Stand der Technik, die zu übertragende Information derart zu codieren, daß der eigentlichen Nutzinformation eine fehlererkennende oder sogar fehlerkorrigierende Redundanz hinzugefügt wird, d. h. mit Hilfe der Codierer 6a bzw. 6b wird der eigentlichen Nutzinformation des jeweiligen Übertragungskanals eine verbindungsspezifische Kontrollinformation hinzugefügt, die zusätzlich zu der Nutzinformation übertragen wird. So kann es sich beispielsweise bei den Codierern 6a, 6b um 8B/10B-Codierer handeln, die eine 8 Bit-Nutzinformation auf einen 10 Bit-Leitungscode abbilden und somit eine 2 Bit-Kontrollinformation hinzufügen. Diejenigen Informationen, die zur Übertragung der Nutzinformationen nicht verwendet werden, werden als Codeverletzungen bezeichnet. So beträgt beispielsweise bei einem 10 Bit-Leitungscode der gesamte Zeichenvorrat für die Übertragung von Nutzinformationen 2¹⁰ Zeichen, d. h. 1024 Zeichen, wobei jedoch davon lediglich 256 Zeichen für die Übertragung der Nutzinformation verwendet werden. Die verbleibenden 768 Zeichen stellen die Codeverletzung dar und können dafür verwendet werden, zusätzliche Informationen zu übertragen. Bisher werden mit Hilfe der zuvor genannten Codeverletzungen insbesondere Synchronisierinformationen zusammen mit der eigentlichen Nutzinformation übertragen, welche beispielsweise den Übertragungstakt des Datenstroms kennzeichnen. Wie nachfolgend noch näher erläutert wird, wird vorteilhafterweise gemäß der vorliegenden Erfindung die Codeverletzung zudem zur Übertragung der erfindungsgemäß vorgeschlagenen Identifizierungsinformation verwendet.

Die Codierer 6a, 6b bilden die zu übertragenden Informationen vorteilhafterweise derart ab, daß nur möglichst kurze Folgen gleichartiger Bits nacheinander übertragen werden, um auf diese Weise Gleichstromfreiheit der Übertragung zu erzielen.

Die von den Codierern 6a, 6b nunmehr codierte Information der einzelnen Übertragungskanäle wird schließlich Modulatoren 7a bzw. 7b zugeführt, welche die zu übertragenden Daten bzw. Informationen auf ein bestimmtes Trägersignal modulieren. Die Ausgangssignale der einzelnen Modulatoren 7a, 7b werden zusammen anschließend der eigentlichen Sendeeinheit 8 zugeführt, deren Aufgabe es ist, die an ihr anliegenden Daten der einzelnen Übertragungskanäle gleichzeitig über den Lichtwellenleiter 3 zu übertragen. Wie bereits erläutert worden ist, weist die Sendeeinheit 8 zu diesem Zweck eine Vielzahl von optischen Sendemitteln, wie z. B. Laserdioden oder Leuchtdioden, auf, die jeweils mit unterschiedlichen Wellenlängen innerhalb des bevorzugten Fensters mit der Breite von 100 nm bei der Wellenlänge 1,5 µm betrieben werden. Jedem Übertragungskanal ist dabei eine andere Übertragungswellenlänge bzw. ein anderes Sendemittel bzw. Sendeelement zugewiesen. Die Lichtstrahlen dieser einzelnen optischen Sendemittel werden in der Sendeeinheit 8 über selektive Wellenlängenmultiplexer zusammengefaßt und in den Lichtwellenleiter 3 eingekoppelt.

Eine Besonderheit der vorliegenden Erfindung ist die Tatsache, daß über den Lichtwellenleiter 3 nicht nur die bereits zuvor erläuterten Nutz- und Synchronisierinformationen eines jeden Übertragungskanals übertragen werden, sondern zudem Identifizierungsinformationen, die die Sendefrequenz bzw. - wellenlänge des jeweiligen Übertragungskanals bzw. den dem Übertragungskanal zugewiesenen Sender spezifizieren. Zu diesem Zweck ist vorgesehen, daß insbesondere mit Hilfe der in Figur 1 gezeigten Codierer 6a, 6b an einer bestimmten Stelle in den jeweiligen Datenstrom eine Frequenz- bzw. Identifizierungsinformation eingeblendet wird, welche die Wellenlänge des dem jeweiligen Übertragungskanal entsprechenden optischen Sendemittels der Sendevorrichtung 8 bezeichnet. Die Identifizierungsinformation kann jedoch in den Datenstrom eines jeden Kanals auch an anderer Stelle der in Figur 1 gezeigten Sendevorrichtung 1 eingefügt werden, insbesondere auch erst in der Sendevorrichtung 8.

Figur 2 zeigt beispielhaft den Aufbau des von der Sendevorrichtung 8 über den Lichtwellenleiter 3 übertragenen Datenstroms eines Übertragungskanals. Die Informationen dieses Übertragungskanals werden insbesondere seriell in Form von Zeitschlitzen übertragen, wobei des weiteren die Informationen getaktet, d. h., in Rahmen zugefaßt übertragen werden. Wie in Figur 2 gezeigt ist, besteht ein Rahmen im wesentlichen aus einem mehrere Zellen oder Zeitschlitze Z₀-Zₙ umfassenden Feld für die Nutzinformation NI des Übertragungskanals sowie einem vorauseilenden Feld CV, welches der zuvor erläuterten Codeverletzung entspricht, d. h. das Feld CV enthält Informationen, die bei der Codierung der eigentlichen Nutzinformation in Form von Redundanz hinzugefügt worden sind. Wie aus dem allgemeinen Stand der Technik bereits bekannt ist, können die Codeverletzungen als Synchronisierinformation zur Markierung der leitungsspezifischen Signale verwendet werden. Demzufolge umfaßt das Feld CV beispielsweise zwei Zeitschlitze S₀ und S₁, die die Präambel des entsprechenden Rahmens bilden. Das Feld CV der Codeverletzungen kann selbstverständlich weitere Steuerinformationen enthalten, die beispielsweise die Zusammengehörigkeit der einzelnen Zeitschlitze Z₀₋Zₙ des Nutzinformationsfeldes NI bezeichnen. Insbesondere umfaßt das Feld CV der Codeverletzungen jedoch auch Zeitschlitze F₀, F₁, die die Sendefrequenz des entsprechenden Übertragungskanals bzw. das jeweilige Sendeelement der Sendeeinheit 8 festlegen. Dabei kann die Sendefrequenz beispielsweise durch einen Binärcode oder durch eine hexadezimale/dezimale Ziffernfolge oder dergleichen in den Zeitschlitzen F₀ und F₁ festgelegt sein. Wie in Figur 2 gezeigt ist, wird nach dem letzten Zeitschlitz des Nutzinformationsfelds NI wieder die Präambel des nachfolgenden Rahmens mit den Synchronisierinformationen S₀ und S₁ sowie neuen Identifizierungsinformationen F₀, F₁ übertragen, so daß vorteilhafterweise für jeden Rahmen eine separate Identifizierungsinformation übertragen wird, um empfangsseitig stets eine möglichst aktualisierte Zuordnung der empfangenen Daten zu dem jeweils geeigneten Empfänger der Empfangsvorrichtung herbeiführen zu können.

Der über den Lichtwellenleiter 3 übertragene Datenstrom mit den Daten der einzelnen Übertragungskanälen wird einer Empfangseinheit 9 der in Figur 1 gezeigten Empfangsvorrichtung 2 zugeführt, wobei die Empfangseinheit 9 entsprechend den einzelnen optischen Sendemitteln der Sendeeinheit 8 mehrere optische Empfangsmittel aufweist, die jeweils einem der Übertragungskanäle zugeordnet sind. Diese optischen Empfangsmittel können beispielsweise durch Empfangsdioden gebildet sein, die die einzelnen Lichtsignale aufnehmen und in entsprechende elektrische Signale umwandeln. Auf der Empfangsseite sollen die Daten jedes Übertragungskanals dem richtigen Empfangsmittel bzw. Empfangselement zu gewiesen werden. Zu diesem Zweck ist gemäß der vorliegenden Erfindung vorteilhafterweise vorgesehen, die in dem über den Lichtwellenleiter 3 übertragenen Datenstrom enthaltene Identifizierungsinformation aus dem Datenstrom zu extrahieren, d. h. auszublenden, was problemlos möglich ist, da - wie in Figur 2 gezeigt ist - die Identifizierungsinformation in dem Datenstrom stets an derselben Stelle innerhalb eines Rahmens befindlich ist. Zu diesem Zweck ist in der Empfangsvorrichtung 9 eine entsprechende Schaltung 15 vorgesehen, welche die einzelnen Lichtsignale empfängt und daraus die jeweils darin enthaltene Identifizierungsinformation gewinnt. Die somit gewonnene Identifizierungsinformation wird von der Schaltung 15 ausgewertet, so daß die Schaltung 15 anhand der in der extrahierten Identifizierungsinformation enthaltenen Kennung der (Soll-)Sendefrequenz bzw. des entsprechenden Sendeelements über eine entsprechend vorgesehene Zuordnungslogik 10 die empfangenen Daten eindeutig dem geeigneten Empfangselement der Empfangseinheit 9 zuordnen und darauf abbilden kann. So kann beispielsweise die Zuordnungslogik 10 mit Speichermitteln versehen sein, in welchen zu jeder Identifizierungsinformation das jeweils passende Empfangselement gespeichert ist, so daß nach Auswertung der Identifizierungsinformation und Zugriff auf diese Speichermittel eine exakte Zuordnung der jeweils übertragenen Daten auf das geeignete Empfangselement möglich ist.

Selbstverständlich kann die Identifizierungsinformation-Auswerteeinrichtung 15 und die Zuordnungseinrichtung 10 durch eine gemeinsame Einrichtung bzw. Schaltungslogik realisiert sein.

In der Empfangseinheit 9 werden die somit von den einzelnen Empfangselementen empfangenen Lichtsignale der Übertragungskanäle auf entsprechend vorgesehene Demodulatoren 11a, 11b aufgeteilt, um die Funktion der Modulatoren 7a, 7b des Senders 1 umzukehren. Um die senderseitig durchgeführten Maßnahmen rückgängig zu machen, sind analog Decodierer 12a, 12b und Entschlüsseler 13a, 13b vorgesehen, so daß schließlich die Nutzinformation eines jeden Übertragungskanals in demodulierter, decodierter und entschlüsselter Fassung entsprechenden Signalsenken 14a, 14b zugeführt werden kann, wobei die Signalsenken wiederum durch Teilnehmer-Endgeräte des Kommunikationsnetzes gebildet sein können.

Wie zuvor erläutert worden ist, können mit Hilfe der vorliegenden Erfindung bei der gewünschten Sendewellenlänge von 1,5 um mit einer Bandbreite von 100 nm eine Vielzahl von Übertragungskanälen durch Anwendung des Wellenlängenmultiplexverfahrens synchron übertragen werden, wobei aufgrund der dabei zur Verfügung stehenden Frequenzbandbreite von ca. 13350 GHz eine Vielzahl von Übertragungskanälen mit jeweils einer Bandbreite von einigen GHz übertragen werden können.

Bei dem in Figur 1 dargestellten Ausführungsbeispiel ist der Übersichtlichkeit halber für jeden Übertragungskanal eine separate Verschlüsselungseinheit, Codiereinheit, Moduliereinheit, Demoduliereinheit, Decodiereinheit und Entschlüsselungseinheit vorgesehen. Selbstverständlich können die Daten der einzelnen Übertragungskanäle jedoch auch über gemeinsame Verschlüsselungseinheiten, Codiereinheiten, Moduliereinheiten usw. geführt werden.

## Patentansprüche

1. Verfahren zum Übertragen von Daten von einer Sendevorrichtung (1) zu einer Empfangsvorrichtung(2),
wobei von der Sendevorrichtung (1) gleichzeitig die Daten einer Mehrzahl von Übertragungskanälen über ein bestimmtes Übertragungsmedium (3) mit unterschiedlichen Sendefrequenzen übertragen werden, und
wobei jedem Übertragungskanal in der Sendevorrichtung (1) ein entsprechendes Sendemittel (8) und in der Empfangsvorrichtung (2) ein entsprechendes Empfangsmittel (9) zugeordnet ist,
dadurch gekennzeichnet,
daß die übertragenen Daten eines Übertragungskanals Identifizierungsinformationen (F₀, F₁) enthalten, welche das dem Übertragungskanal zugeordnete Sendemittel (8) oder dessen Sendefrequenz identifizieren, und
daß nach Auswertung der Identifizierungsinformationen (F₀, F₁) die übertragenen Daten eines Übertragungskanals einem den Identifizierungsinformationen (F0, F1) entsprechenden Empfangsmittel (8) der Empfangsvorrichtung (2) zugewiesen werden.

2. Verfahren nach Anspruch 1,
dadurch gekennzeichnet,
daß die Sendevorrichtung (1) optische Sendemittel (8) und die Empfangsvorrichtung (2) optische Empfangsmittel (9) aufweist, wobei die Daten über eine Lichtwellenleiteranordnung (3) übertragen werden.

3. Verfahren nach Anspruch 2,
dadurch gekennzeichnet,
daß die Übertragungskanäle in einem Fenster mit einer Breite von ca. 100 nm bei einer Wellenlänge von ca. 1,5 µm übertragen werden, wobei jedem Übertragungskanal eine Frequenzbandbreite von mehreren GHz zugewiesen ist.

4. Verfahren nach einem der vorhergehenden Ansprüche,
dadurch gekennzeichnet,
daß die Daten von der Sendevorrichtung (1) rahmenweise übertragen werden, wobei jeder Rahmen die Identifizierungsinformationen (F₀, F₁) aufweist.

5. Verfahren nach einem der vorhergehenden Ansprüche,
dadurch gekennzeichnet,
daß die zu übertragenden Daten codiert werden, wodurch der eigentlichen Nutzinformation (NI) des jeweiligen Übertragungskanals redundante Informationen (CV) hinzugefügt werden, wobei die redundante Informationen (CV) die Identifizierungsinformationen (F₀, F₁) enthalten.

6. Verfahren nach Anspruch 5,
dadurch gekennzeichnet,
daß die Identifizierungsinformationen (F₀, F₁) in den zu übertragenden Datenstrom an einer der Empfangsvorrichtung (2) bekannten Stelle eingeblendet werden, so daß die Empfangsvorrichtung (2) durch Ausfiltern der Identifizierungsinformationen (F₀, F₁) diese auswerten kann.

7. Kommunikationssystem,
mit einer Sendevorrichtung (1) zum Übertragen von Daten über ein bestimmtes Übertragungsmedium (3) mit einer bestimmten Sendefrequenz zu einer Empfangsvorrichtung (2),
wobei die Sendevorrichtung (1) eine Mehrzahl von Sendemitteln (8) und die Empfangsvorrichtung (2) eine Mehrzahl von Empfangsmitteln (9) aufweist und jedem Sendemittel (8) und Empfangsmittel (9) die Daten eines bestimmten Übertragungskanals zugewiesen sind, und
wobei die einzelnen Sendemittel (8) die Daten der entsprechenden Übertragungskanäle mit unterschiedlichen Sendefrequenzen gleichzeitig über das Übertragungsmedium (3) übertragen,
dadurch gekennzeichnet,
daß die Sendevorrichtung (1) Datenmoduliermittel (6a, 6b; 7a, 7b) aufweist, welche den zu übertragenden Daten jedes Übertragungskanals Identifizierungsinformationen (F₀, F₁) hinzufügen, welche das dem Übertragungskanal zugeordnete Sendemittel (8) oder dessen Sendefrequenz identifizieren, und
daß die Empfangsvorrichtung (2) Identifizierungsinformation-Auswertemittel (15) aufweist, welche bei Empfang der übertragenen Daten eines Übertragungskanals daraus die Identifizierungsinformationen (F₀, F₁) gewinnen, und
daß die Empfangsvorrichtung (2) Zuordnungsmittel (10) aufweist, welche die übertragenen Daten eines Übertragungskanals abhängig von den ausgewerteten Identifizierungsinformationen diese Übertragungskanals einem Empfangsmittel (9) der Empfangsvorrichtung (2) zuweisen.

8. Kommunikationssystem nach Anspruch 7,
dadurch gekennzeichnet,
daß die Sendevorrichtung (1) optische Sendemittel (8) und die Empfangsvorrichtung (2) optische Empfangsmittel (9) aufweist, wobei die optischen Sendemittel (8) die Daten über eine Lichtwellenleiteranordnung (3) zu den optischen Empfangsmitteln (9) übertragen.

9. Kommunikationssystem nach Anspruch 7 oder 8,
dadurch gekennzeichnet,
daß die Datenmoduliermittel der Sendevorrichtung (1) Codiermittel (6a, 6b) aufweisen, welche den zu übertragenden Daten redundante Informationen hinzufügen, welche die Identifizierungsinformationen (F₀, F₁) enthalten.

10. Verwendung eines Kommunikationssystems nach einem der Ansprüche 7 bis 9 in einem Telekommunikationsnetz.
